# EUROPEAN PATENT SPECIFICATION

(11) **EP 4 485 581 B1**
(45) Date of publication and mention of the grant of the patent: **07.10.2026**
(21) Application number: 24184255.8
(22) Date of filing: 25.06.2024
(51) Int. Cl.: H01M 4/62, H01M 10/0525, H01M 10/0585, H01M 10/0587, H01M 4/13, H01M 4/134, H01M 4/36, H01M 4/38, H01M 10/052

(54) **SECONDARY BATTERY AND ELECTRONIC DEVICE**
SEKUNDÄRBATTERIE UND ELEKTRONISCHE VORRICHTUNG
BATTERIE SECONDAIRE ET DISPOSITIF ÉLECTRONIQUE

(30) Priority: 26.06.2023 CN 202310759829
(43) Date of publication of application: 01.01.2025
(73) Proprietor: Ningde Amperex Technology Limited, Zhangwan Town, Jiaocheng District Ningde City Fujian 352100 (CN)
(72) Inventor: FANG, Guoqing, Ningde City, Fujian Province, People s Republic of China, 352100 (CN)
(74) Representative: Icosa

(56) References cited:
- EP-A1- 4 009 394
- KR-A- 20220 129 402
- US-A1- 2022 246 992

## Description

### BACKGROUND

### 1. Technical Field

This application relates to the field of electrochemical technology, and in particular, to a secondary battery and an electronic device.

### 2. Description of the Related Art

With the popularization of the fast-charge technology, people are imposing higher requirements on the charging speed of secondary batteries (for example, a lithium-ion battery). The charging speed is closely related to the kinetics of the lithium-ion battery. The high charging speed requires the chemical system of the lithium-ion battery to meet the high-rate charging requirement without bringing about any problems such as lithium plating on a cathode or anode electrolyte interphase. For a lithium-ion battery, at the head (that is, the position at which a tab extends out) or tail (that is, an end opposite to the position at which the tab extends out) of the lithium-ion battery, a region in which a negative electrode overhangs a positive electrode (hereinafter referred to as an overhang-specific region) is a kinetic weak region that is the most prone to lithium plating. Therefore, how to alleviate the lithium plating in the overhang-specific region of the lithium-ion battery is a pressing technical challenge to a person skilled in the art.

The documents KR 2022 0129402 and US 2022 246992 disclose secondary batteries for avoiding lithium plating.

### SUMMARY

An objective of this application is to provide a secondary battery and an electronic device to alleviate lithium plating in an overhang-specific region of the secondary battery.

It is hereby noted that in the description hereof, this application is construed by using a lithium-ion battery as an example of the secondary battery, but the secondary battery of this application is not limited to the lithium-ion battery. Specific technical solutions are as follows:
A first aspect of this application provides a secondary battery according to claim 1. By controlling the thickness D µm of the positive active material layer, the mass percent B% of silicon, and the value of BD/100 to fall within the ranges specified herein, this application reduces the speed of deintercalating lithium ions from a region covered by the inert layer, thereby alleviating the lithium plating in the overhang-specific region of the secondary battery, and also achieving a relatively high energy density of the secondary battery.

In an embodiment of this application, 0.60 ≤ BD/100 ≤ 4.00. By controlling the value of BD/100 to fall within the above range, this application reduces the speed of deintercalating lithium ions from the region covered by the inert layer, thereby alleviating the lithium plating in the overhang-specific region of the secondary battery, and also achieving a relatively high energy density of the secondary battery.

In an embodiment of this application, along the width direction of the positive electrode plate, a width of the inert layer is E mm, satisfying: 1 ≤ E ≤ 20. By controlling the width of the inert layer to fall within the above range, this application alleviates the lithium plating in the overhang-specific region of the secondary battery.
In an embodiment of this application, 30 ≤ D ≤ 80, and 15 ≤ E ≤ 18. By controlling the values of D and E to fall within the above ranges, this application reduces the speed of deintercalating lithium ions, thereby alleviating the lithium plating in the overhang-specific region of the secondary battery,
In an embodiment of this application, 80 < D ≤ 100, and 0.03 < E/D < 0.15. By controlling the values of D and E to fall within the above ranges, this application reduces the speed of deintercalating lithium ions, thereby alleviating the lithium plating in the overhang-specific region of the secondary battery,
In an embodiment of this application, 100 < D ≤ 200, and 1 ≤ E ≤ 2.5. By controlling the values of D and E to fall within the above ranges, this application reduces the speed of deintercalating lithium ions, thereby alleviating the lithium plating in the overhang-specific region of the secondary battery,
According to the claimed invention, the inert layer includes linear fluoropolysiloxane F(-SiF₂-O-)ₙH, where n is 3 to 100. The inert layer includes the linear fluoropolysiloxane that can reduce the speed of deintercalating lithium ions from the region covered by the inert layer, thereby alleviating the lithium plating in the overhang-specific region of the secondary battery.

In an embodiment of this application, a thickness of the inert layer is 0.5 µm to 2.0 µm. By controlling the thickness of the inert layer to fall within the above range, this application alleviates the lithium plating in the overhang-specific region of the secondary battery without impairing the energy density of the secondary battery.

In an embodiment of this application, the electrode assembly assumes a jelly-roll structure.

A second aspect of this application provides an electronic device. The electronic device includes the secondary battery disclosed in any one of the preceding embodiments. Therefore, the electronic device exhibits good operating performance.

Some of the beneficial effects of this application are as follows:
This application provides a secondary battery and an electronic device. By controlling the thickness D µm of the positive active material layer, the mass percent B% of silicon, and the value of BD/100 in the secondary battery to fall within the ranges specified herein, this application reduces the speed of deintercalating lithium ions from the region covered by the inert layer, thereby alleviating the lithium plating in the overhang-specific region of the secondary battery, and also achieving a relatively high energy density of the secondary battery.

Definitely, a single product or method in which the technical solution of this application is implemented does not necessarily achieve all of the above advantages concurrently.

### BRIEF DESCRIPTION OF DRAWINGS

To describe the technical solutions in some embodiments of this application or the prior art more clearly, the following outlines the drawings to be used in the description of some embodiments of this application or the prior art. Evidently, the drawings outlined below merely illustrate some embodiments of this application, and a person of ordinary skill in the art may derive other embodiments from the drawings.
FIG. 1 is a schematic partial view of a cross-sectional structure of a secondary battery sectioned along a thickness direction of the battery according to an embodiment of this application;
FIG. 2 is a schematic structural diagram of a positive electrode plate according to an embodiment of this application;
FIG. 3 is a cross-sectional schematic view of sectioning along an A-A direction shown in FIG. 2;
FIG. 4 is a schematic structural diagram of a positional relationship between a positive electrode plate and a negative electrode plate according to an embodiment of this application;
FIG. 5 is a cross-sectional schematic view of sectioning along a B-B direction shown in FIG. 4;
FIG. 6 is a schematic diagram of measuring a thickness of an inert layer; and
FIG. 7 is a schematic diagram of lithium plating degree.

### DETAILED DESCRIPTION

The following describes the technical solutions in some embodiments of this application clearly in detail with reference to the drawings appended hereto. Evidently, the described embodiments are merely a part of but not all of the embodiments of this application.

It is hereby noted that in specific embodiments of this application, this application is construed by using a lithium-ion battery as an example of the secondary battery, but the secondary battery of this application is not limited to the lithium-ion battery.

In the prior art, an overhang-specific region at the head or tail of a lithium-ion battery is a kinetic weak region, and therefore, is very prone to lithium plating. That is because the edge effect makes the delithiation speed at an edge region of a positive electrode plate faster than that at a main body of the positive electrode plate in a secondary battery. Consequently, lithium plating is prone to occur at the edge region of a negative electrode plate, thereby resulting in local lithium plating at the overhang-specific region. Nowadays, a typical countermeasure is to boost kinetics of the negative electrode to avoid the lithium plating risk in the overhang-specific region. For example, by reducing the coating weight, the negative electrode plate is made thinner, the diffusion path of lithium ions is shortened, and the reaction kinetics are accelerated, thereby avoiding the lithium plating. However, this is usually accompanied by the loss of the energy density. On the other hand, this countermeasure fails to fundamentally solve the above problem. Under some extreme test conditions, the lithium plating risk persists in the overhang-specific region. For example, when a lithium-ion battery is being cycled at a low temperature, the conductivity of the electrolyte solution in conducting lithium ions is reduced, the impedance of deintercalating the lithium ions from the positive electrode and the impedance of intercalating the lithium ions into the negative electrode are increased significantly, and the impedance of intercalating the lithium ions into the negative electrode is increased by a larger margin, thereby giving rise to lithium plating. In view of the above situation, this application provides a secondary battery and an electronic device.

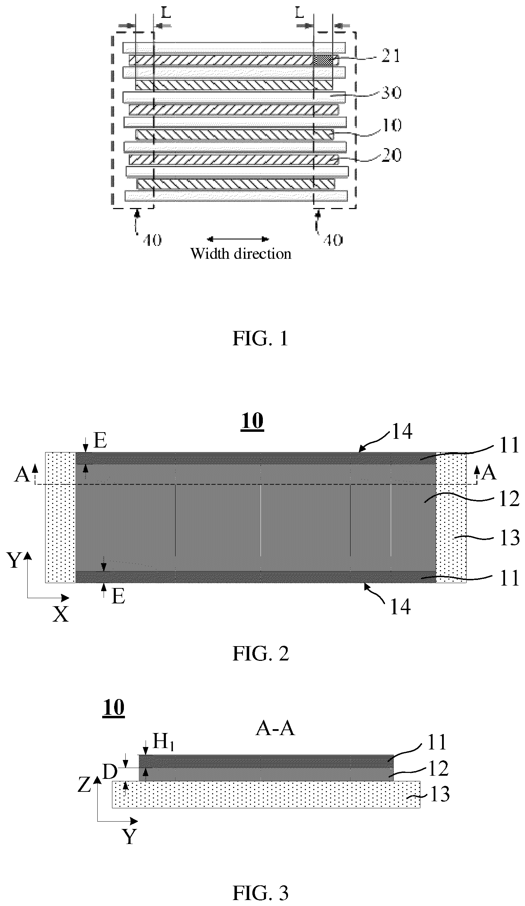

It is hereby noted that in this application, the overhang-specific region, that is, a region in which the negative electrode overhangs the positive electrode, bears the following meaning: as shown in FIG. 1, a separator 30 is located between a positive electrode plate 10 and a negative electrode plate 20, and a region 40 marked with a dashed box in FIG. 1 is an overhang-specific region. Specifically, the overhang-specific region includes a region in which the negative electrode plate 20 overhangs the positive electrode plate 10 along the width direction of the secondary battery, and includes a local region 21 formed by extending the negative electrode plate 20 for a distance of L mm from a position flush with the edge of the positive electrode plate 10 along a center direction of the negative electrode plate (the local region is exemplarily marked in just one negative electrode plate 20 in FIG. 1 for illustrative purposes only, but is not limited to the example), where L is 0 to 10. A person skilled in the art understands that the width direction of the negative electrode plate, the positive electrode plate, and the separator is the same as the width direction of the secondary battery.

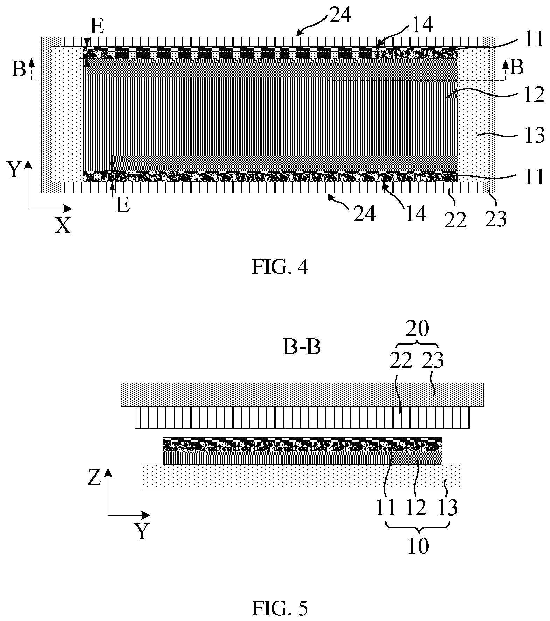

As shown in FIG. 2 to FIG. 5, a first aspect of this application provides a secondary battery. The secondary battery includes an electrode assembly. The electrode assembly includes a positive electrode plate 10 and a negative electrode plate 20. The positive electrode plate 10 and the negative electrode plate 20 are stacked up. For ease of understanding, a three-dimensional rectangular coordinate system is created in which the length direction of the positive electrode plate 10 is an X direction, the width direction of the positive electrode plate 10 is a Y direction, and the thickness direction of the positive electrode plate 10 is a Z direction. Understandably, the length direction, width direction, and thickness direction of the positive current collector 13, the positive active material layer 12, and the inert layer 11 are identical to such directions of the positive electrode plate 10 respectively. The length direction, width direction, and thickness direction of the negative electrode plate 20, the negative current collector 23, and the negative active material layer 22 are also identical to such directions of the positive electrode plate 10 respectively. The positive electrode plate 10 includes a positive current collector 13 and a positive active material layer 12 disposed on a surface of the positive current collector 13. The thickness of the positive active material layer 12 is D µm, satisfying: 30 ≤ D ≤ 200. The negative electrode plate 20 includes a negative current collector 23 and a negative active material layer 22 disposed on a surface of the negative current collector 23. Referring to FIG. 4 and FIG. 5, the positive active material layer 12 is oriented toward the negative active material layer 22. In the width direction Y of the positive electrode plate 10, the negative active material layer 22 includes two opposite first edges 24, and the positive active material layer 12 includes two opposite second edges 14. The two second edges 14 are located between the two first edges 24. The first edges 24 of the negative active material layer 22 exceeds the second edges 14 of the positive active material layer 12, which, as understandable to a person skilled in the art, means that, one first edge 24 of the negative active material layer 22 exceeds one second edge 14, closer to this first edge of the negative active material layer, of the positive active material layer 12. The width direction of the positive electrode plate 10 is perpendicular to the thickness direction of the electrode assembly (not shown in the drawing). It is hereby noted that the separator is not shown in FIG. 4 and FIG. 5 in order to more clearly illustrate the positional relationship between the positive active material layer 12 and the negative active material layer 22. However, in the secondary battery, a separator is provided between the positive electrode plate 10 and the negative electrode plate 20, and this application is not limited to the shown example. An inert layer 11 is provided on a surface of the positive active material layer 12. The inert layer 11 coincides with at least a part of the second edges 14. A mass percent of silicon in a region of 15 µm × 15 µm on the inert layer 11 is B%, satisfying: 0.1 ≤ B ≤ 6.0, and B and D satisfy: 0.15 ≤ BD/100 ≤ 12.00. For example, the value of D is 30, 50, 70, 90, 110, 130, 150, 170, 190, 200, or a value falling within a range formed by any two thereof. The value of B is 0.1, 0.5, 1.0, 1.5, 2.0, 2.5, 3.0, 3.5, 4.0, 4.5, 5.0, 5.5, 6.0, or a value falling within a range formed by any two thereof. The value of BD/100 is 0.15, 0.60, 1.00, 2.00, 3.00, 4.00, 5.00, 6.00, 7.00, 8.00, 9.00, 10.00, 11.00, 12.00, or a value falling within a range formed by any two thereof.

By disposing an inert layer 11 on the surface of the positive active material layer 12, this application makes the inert layer 11 coincide with at least a part of the second edges, so as to reduce the speed of deintercalating lithium ions from the region covered by the inert layer 11. When the mass percent of silicon in the region of 15 µm × 15 µm on the inert layer 11 is less than 0.1%, the thickness of the inert layer 11 is not enough to exert the effect of the inert layer 11. When the mass percent of silicon in the region of 15 µm × 15 µm on the inert layer 11 is greater than 6.0%, the thickness of the inert layer 11 is overly large. This may result in an excessive difference in the delithiation and lithiation speed between the region covered by the inert layer 11 and the region not covered by the inert layer 11, and may result in lithium plating at a boundary between the region covered by the inert layer 11 and the region not covered by the inert layer 11. When the value of BD/100 is less than 0.15, the thickness of the positive active material layer 12 is overly small and/or the mass percent of silicon is overly low, and the thickness of the inert layer 11 is not enough to exert the effect of the inert layer 11, thereby being unable to play a role in alleviating the lithium plating of the negative electrode plate 20; or, the content of the positive active material in the positive electrode plate 10 is overly low, thereby impairing the energy density of the secondary battery. When the value of BD/100 is greater than 80, the thickness of the positive active material layer 12 is overly large and/or the mass percent of silicon is overly high, thereby resulting in lithium plating at the boundary between the region covered by the inert layer 11 and the region not covered by the inert layer 11, and impairing the energy density of the secondary battery. When the thickness of the positive active material layer 12 is less than 30 µm, the thickness of the positive active material layer 12 is overly small, the positive electrode plate 10 is much affected by the edge effect, the edge region of the positive electrode plate 10 is enlarged, and the lithium plating region of the negative electrode plate 20 is enlarged. In addition, the content of the positive active material in the positive active material layer 12 is overly low, thereby impairing the energy density of the secondary battery. When the thickness of the positive active material layer 12 is greater than 200 µm, the volume expansion of the secondary battery results in a loss of the energy density, thereby impairing the energy density of the secondary battery. By controlling the thickness D µm of the positive active material layer 12, the mass percent B% of silicon, and the value of BD/100 to fall within the ranges specified herein, this application reduces the speed of deintercalating lithium ions from the region covered by the inert layer 11, thereby alleviating the lithium plating in the overhang-specific region 40 of the secondary battery, and also achieving a relatively high energy density of the secondary battery.

"The positive active material layer disposed on a surface of the positive current collector" means a positive active material layer disposed on one surface of the positive current collector, or the positive active material layers disposed on both surfaces of the positive current collector. The "surface" may be a partial or entire surface of the positive current collector. Understandably, along the width direction of the positive electrode plate, the inert layer is provided on both sides of the positive active material layer. In some embodiments of this application, the positive active material layer is disposed on one surface of the positive current collector, and therefore, the insert layer is disposed on one surface of the positive current collector. In some other embodiments of this application, the positive active material layer is disposed on both surfaces of the positive current collector, and therefore, the insert layer is also disposed on both surfaces of the positive current collector.

"The negative active material layer disposed on a surface of the negative current collector" means a negative active material layer disposed on one surface of the negative current collector, or the negative active material layers disposed on both surfaces of the negative current collector. The "surface" may be a partial or entire surface of the negative current collector.

In an embodiment of this application, 0.60 ≤ BD/100 ≤ 4.00. For example, the value of BD/100 is 0.60, 1.00, 1.50, 2.00, 2.50, 3.00, 3.50, 4.00, or a value falling within a range formed by any two thereof. By controlling the value of BD/100 to fall within the above range, this application reduces the speed of deintercalating lithium ions from the region covered by the inert layer, thereby alleviating the lithium plating in the overhang-specific region of the secondary battery, and also achieving a relatively high energy density of the secondary battery.

In an embodiment of this application, as shown in FIG. 1 and FIG. 2, along the width direction Y of the positive electrode plate 10, the width of the inert layer 11 is E mm, satisfying: 1 ≤ E ≤ 20. For example, the value of E is 1, 2, 4, 6, 8, 10, 12, 14, 16, 18, 20, or a value falling within a range formed by any two thereof. By controlling the width of the inert layer to fall within the above range, this application can reduce the speed of deintercalating lithium from the region covered by the inert layer and the speed of intercalating lithium into the corresponding region on the negative electrode plate, thereby alleviating the lithium plating in the overhang-specific region of the secondary battery.

In an embodiment of this application, 30 ≤ D ≤ 80, and 15 ≤ E ≤ 18. For example, the value of D is 30, 40, 50, 60, 70, 80, or a value falling within a range formed by any two thereof. The value of E is 15, 16, 17, 18, or a value falling within a range formed by any two thereof. By controlling the values of D and E to fall within the above ranges, the thickness of the positive active material layer well matches the width of the inert layer, thereby reducing the speed of deintercalating lithium ions without impairing the capacity of the secondary battery, and in turn, alleviating the lithium plating in the overhang-specific region of the secondary battery.

In an embodiment of this application, 80 < D ≤ 100, and 0.03 < E/D < 0.15. Further, in some embodiments, 2.4 < E < 15. For example, the value of D is 81, 100, 120, 140, 160, 180, 200, or a value falling within a range formed by any two thereof. The value of E/D is 0.04, 0.06, 0.08, 0.10, 0.12, 0.14, or a value falling within a range formed by any two thereof. By controlling the values of D and E to fall within the above ranges, the thickness of the positive active material layer well matches the width of the inert layer, thereby reducing the speed of deintercalating lithium ions without impairing the capacity of the secondary battery, and in turn, alleviating the lithium plating in the overhang-specific region of the secondary battery.

In an embodiment of this application, 100 < D ≤ 200, and 1 ≤ E ≤ 2.5. For example, the value of D is 101, 120, 140, 160, 180, 200, or a value falling within a range formed by any two thereof. The value of E is 1, 1.5, 2, 2.5, or a value falling within a range formed by any two thereof. By controlling the values of D and E to fall within the above ranges, the thickness of the positive active material layer well matches the width of the inert layer, thereby reducing the speed of deintercalating lithium ions without impairing the capacity of the secondary battery, and in turn, alleviating the lithium plating in the overhang-specific region of the secondary battery.

According to the claimed invention, the inert layer includes linear fluoropolysiloxane F(-SiF₂-O-)ₙH, where n is 3 to 100. For example, the value of n is 3, 10, 20, 30, 40, 50, 60, 70, 80, 90, 100, or a value falling within a range formed by any two thereof. The linear fluoropolysiloxane is of good chemical stability, thermal stability, and electrochemical inertness, and is not easily soluble in common electrolyte solvent systems. The inert layer containing the linear fluoropolysiloxane is a dense passivation layer, and can reduce the speed of deintercalating lithium ions from the region covered by the inert layer, thereby alleviating the lithium plating in the overhang-specific region of the secondary battery.

In an embodiment of this application, as shown in FIG. 2, a thickness H₁ of the inert layer 11 is 0.5 µm to 2.0 µm. For example, the thickness H₁ of the inert layer 11 is 0.5 µm, 0.8 µm, 1.1 µm, 1.4 µm, 1.7 µm, 2.0 µm, or a value falling within a range formed by any two thereof. By controlling the thickness of the inert layer to fall within the above range, this application enables the inert layer to well cover the positive active material layer without impairing the energy density of the secondary battery, and reduces the speed of deintercalating lithium ions from the region covered by the inert layer, thereby alleviating the lithium plating in the overhang-specific region of the secondary battery.

In an embodiment of this application, the electrode assembly assumes a stacked structure. In an embodiment of this application, the electrode assembly assumes a jelly-roll structure.

The type of the positive current collector is not particularly limited herein, as long as the objectives of this application can be achieved. For example, the positive current collector may include aluminum foil, aluminum alloy foil, or the like. The positive active material layer of this application includes a positive active material. The type of the positive active material is not particularly limited herein, as long as the positive active material contains the transition metal element specified herein and can achieve the objectives of this application. For example, the positive active material may include at least one of lithium nickel cobalt manganese oxide (LiNi_{0.8}Co_{0.1}Mn_{0.1}O₂), lithium nickel cobalt aluminum oxide, lithium iron phosphate, a lithium-rich manganese-based material, lithium cobalt oxide (LiCoO₂), lithium manganese oxide, lithium manganese iron phosphate, lithium titanium oxide, or the like. In this application, the positive active material may further include a non-metallic element. For example, the non-metallic elements include at least one of fluorine, phosphorus, boron, chlorine, silicon, or sulfur. Such elements can further improve the stability of the positive active material. In this application, the thicknesses of the positive current collector and the positive active material layer are not particularly limited, as long as the objectives of this application can be achieved. For example, the thickness of the positive current collector is 5 µm to 20 µm, and preferably 6 µm to 18 µm. The thickness of the positive active material layer is 30 µm to 120 µm.

Optionally, the positive active material layer may further include a positive conductive agent and a positive binder. The types of the positive conductive agent and the positive binder in the positive active material layer are not particularly limited herein, as long as the objectives of this application can be achieved. The mass ratio between the positive active material, the positive conductive agent, and the positive binder in the positive active material layer is not particularly limited herein, and may be selected by a person skilled in the art as actually required, as long as the objectives of this application can be achieved. For example, the mass ratio between the positive active material, the positive conductive agent, and the positive binder in the positive active material layer is (95 to 98): (0.5 to 2.5): (1.5 to 3.4).

The method for preparing the positive electrode plate is not particularly limited herein, as long as the objectives of this application can be achieved. For example, steps of preparing a positive electrode plate include, but are not limited to: (1) applying a positive electrode slurry onto one surface of the positive current collector, and oven-drying the slurry to form a positive electrode plate coated with a positive active material layer on a single side; or, (1) applying a positive electrode slurry onto two surfaces of the positive current collector, and oven-drying the slurry to form a positive electrode plate coated with a positive active material layer on both sides; and (2) exposing a target region of the positive electrode plate obtained in step (1) to a mixed atmosphere of an inert gas and SiF₄ for 0.5 h to 1 h to obtain a positive electrode plate with an inert layer on the surfaces on both sides of the positive active material layer. The volume ratio between Ar and SiF₄ in the mixed atmosphere is 1 to 10. The "target region" means a region that needs to be overlaid with an inert layer on the positive electrode plate, and may be selected by a person skilled in the art as actually required, as long as the width of the inert layer falls within the range specified herein.

The method for adjusting and controlling the mass percent B% of silicon is not particularly limited herein, as long as the objectives of this application can be achieved. For example, the mass percent B% of silicon may be controlled by controlling the volume ratio between SiF₄ and Ar during the preparation of the inert layer. Further, in some embodiments, the volume ratio between SiF₄ and the inert gas is 1 to 10, and the mass percent B% of silicon in a region of 15 µm × 15 µm on the inert layer is 0.1% to 6.0%.

The type of the inert gas is not particularly limited herein, as long as the objectives of this application can be achieved. For example, the inert gas includes, but is not limited to, Ar or He.

In an embodiment of this application, the secondary battery further includes a negative electrode plate. The negative electrode plate is not particularly limited herein, as long as the objectives of this application can be achieved. For example, the negative electrode plate includes a negative current collector and a negative active material layer disposed on at least one surface of the negative current collector. The negative current collector is not particularly limited in this application, as long as the objectives of this application can be achieved. For example, the negative current collector may include a copper foil, copper alloy foil, nickel foil, stainless steel foil, titanium foil, foamed nickel, foamed copper, or the like. The negative active material layer in this application includes a negative active material. The type of the negative active material is not particularly limited in this application, as long as the objectives of this application can be achieved. For example, the negative active material may include at least one of natural graphite, artificial graphite, mesocarbon microbeads (MCMB), hard carbon, soft carbon, silicon, a silicon-carbon composite, SiOₓ(0 < x < 2), Li-Sn alloy, Li-Sn-O alloy, Sn, SnO, SnO₂, spinel-structured lithium titanium oxide Li₄Ti₅O₁₂, Li-Al alloy, or metallic lithium. The thicknesses of the negative current collector and the negative active material layer are not particularly limited herein, as long as the objectives of this application can be achieved. For example, the thickness of the negative current collector is 6 µm to 10 µm, and the thickness of the negative active material layer is 30 µm to 130 µm. Optionally, the negative active material layer may further include at least one of a conductive agent, a thickener, or a binder. The types of the negative conductive agent, thickener, and the negative binder in the negative active material layer are not particularly limited herein, as long as the objectives of this application can be achieved. The mass ratio between the negative active material, the negative conductive agent, the negative binder, and thickener in the negative active material layer is not particularly limited herein, as long as the objectives of this application can be achieved. For example, the mass ratio between the negative active material, the negative conductive agent, the negative binder, and the thickener in the negative active material layer is (83.5 to 98.0): (0.5 to 10.0): (0.1 to 5.0): (1.0 to 1.9).

In an embodiment of this application, the secondary battery further includes a separator. The separator is provided between the positive electrode plate and the negative electrode plate to separate the positive electrode plate from the negative electrode plate. The separator is not particularly limited herein, as long as the objectives of this application can be achieved. For example, the separator may be made of a material including but not limited to at least one of: a polyethylene (PE)- or polypropylene (PP)-based polyolefin (PO), a polyester (such as polyethylene terephthalate (PET) film), cellulose, polyimide (PI), polyamide (PA), spandex, or aramid. The type of the separator may include a woven film, a non-woven film, a microporous film, a composite film, a calendered film, or a spinning film.

In an embodiment of this application, the secondary battery further includes a pocket and an electrolyte solution. The pocket and the electrolyte solution are not particularly limited herein, and may be a pocket and electrolyte solution well-known in the art, as long as the objectives of this application can be achieved.

The type of the secondary battery is not particularly limited herein, and may be any device in which an electrochemical reaction occurs. For example, the secondary battery may include, but is not limited to, a lithium metal secondary battery, a lithium-ion secondary battery (lithium-ion battery), a sodium-ion secondary battery (sodium-ion battery), a lithium polymer secondary battery, a lithium-ion polymer secondary battery.

The method for preparing the secondary battery is not particularly limited herein, and may be any preparation method well-known in the art, as long as the objectives of this application can be achieved. For example, the method for preparing the secondary battery includes, but is not limited to, the following steps: stacking the positive electrode plate, the separator, and the negative electrode plate in sequence, and performing operations such as winding and folding as required on the stacked structure to obtain a jelly-roll electrode assembly; putting the electrode assembly into a pocket, injecting the electrolyte solution into the pocket, and sealing the pocket to obtain a secondary battery; or, stacking the positive electrode plate, the separator, and the negative electrode plate in sequence, and then fixing the four corners of the entire stacked structure to obtain a stacked-type electrode assembly, putting the electrode assembly into a pocket, injecting the electrolyte solution into the pocket, and sealing the pocket to obtain a secondary battery.

A second aspect of this application provides an electronic device. The electronic device includes the secondary battery disclosed in any one of the preceding embodiments. Therefore, the electronic device exhibits good operating performance.

The electronic device is not particularly limited herein, and may be any electronic device known in the prior art. For example, the electronic device may include, but is not limited to, a notebook computer, pen-inputting computer, mobile computer, e-book player, portable phone, portable fax machine, portable photocopier, portable printer, stereo headset, video recorder, liquid crystal display television set, handheld cleaner, portable CD player, mini CD-ROM, transceiver, electronic notepad, calculator, memory card, portable voice recorder, radio, backup power supply, motor, automobile, motorcycle, power-assisted bicycle, bicycle, lighting appliance, toy, game console, watch, electric tool, flashlight, camera, large household storage battery, or lithium-ion capacitor.

### Embodiments

The implementations of this application are described below in more detail with reference to embodiments and comparative embodiments. Various tests and evaluations are performed by the following methods.

### Test methods and devices

### Testing the content B of silicon

Disassembling fully-discharged lithium-ion batteries prepared in each embodiment and each comparative embodiment, using dimethyl carbonate (DMC) to wash 3 times a positive electrode plate taken out of the disassembled battery, air-drying the electrode plate, and then analyzing the elements of the electrode plate by use of an energy dispersive X-ray spectrometer (EDS).

Denoting the mass percent of silicon in any region of 15 µm × 15 µm on the inert layer as B%.

### Measuring the width E of the inert layer

Observing the obvious color difference on the surface of a positive electrode plate overlaid with an inert layer. Using a ruler to measure the width at a position of the largest width in a dark-colored region along the width direction of the positive electrode plate, and denoting the width as the width E of the inert layer.

### Measuring the thickness H₁ of the inert layer

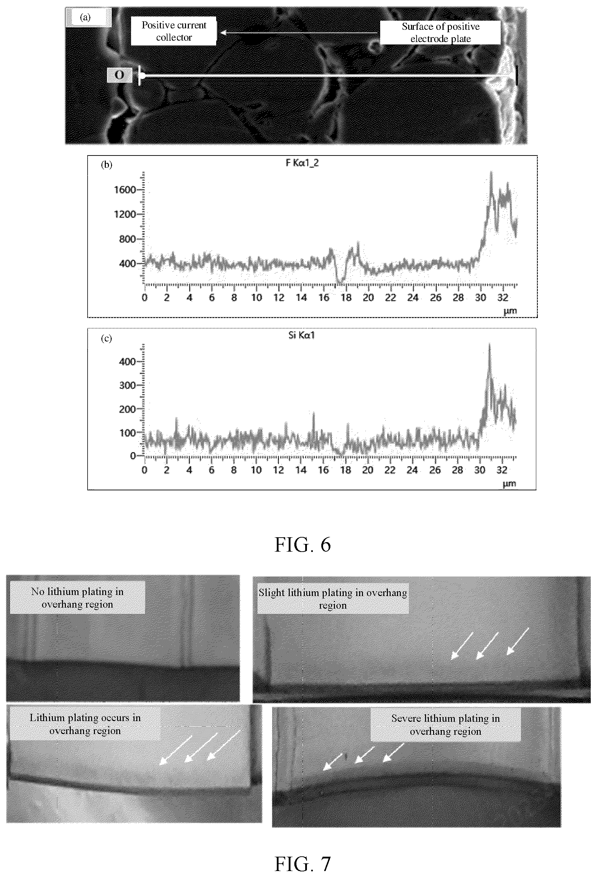

Disassembling fully-discharged lithium-ion batteries prepared in each embodiment and each comparative embodiment, using DMC to wash 3 times a positive electrode plate taken out of the disassembled battery, air-drying the electrode plate, and performing ion beam cross-section polishing to obtain a cross-section of the positive electrode plate. Referring to FIG. 6 in which the test process is shown, and using an EDS spectrometer to perform a line scan test on the cross-section of the positive electrode plate shown in subfigure (a) of FIG. 6. Identifying the ranges in which the peaks of the F signal and the Si signal are exhibited in subfigures (b) and (c) in FIG. 6, so as to obtain the thickness of the inert layer. Specifically, the abscissa in subfigures (b) and (c) in FIG. 6 shows a slicing distance of the positive electrode plate, and the start point and the end point of the slicing correspond to the line segment O in subfigure (a) in FIG. 6. A peak covers an abscissa distance. If a peak is exhibited at a position of the abscissa, it is determined that the F signal and the Si signal appear at this position.

### Measuring the thickness D of the positive active material layer

Discharging the lithium-ion batteries prepared in each embodiment and each comparative embodiment until the voltage reaches 3.0 V, and then disassembling the batteries. Using DMC to wash twice a positive electrode plate taken out of the disassembled battery, air-drying the electrode plate, and measuring the thickness of the positive electrode plate with a ten-thousandth micrometer, denoted as T₁. Subsequently, using N-methyl-pyrrolidone (NMP) to wash off the positive active material layer and the inert layer, and measuring the thickness of the positive current collector, denoted as T₂.

Calculating the thickness of the positive active material layer as: D = (T₁-T₂)/2.

### Determining the lithium plating degree

The charging method for detecting the lithium plating degree varies depending on the thickness D of the positive active material layer:
Charging the battery at 5C until a nominal upper-limit voltage if the thickness D of the positive active material layer satisfies: D < 70 µm;
Charging the battery at 4C until a nominal upper-limit voltage if the thickness D of the positive active material layer satisfies: 70 µm ≤ D < 100 µm;
Charging the battery at 3C until a nominal upper-limit voltage if the thickness D of the positive active material layer satisfies: 100 µm ≤ D < 115 µm;
Charging the battery at 2C until a nominal upper-limit voltage if the thickness D of the positive active material layer satisfies: 115 µm ≤ D < 130 µm;
Charging the battery at 1C until a nominal upper-limit voltage if the thickness D of the positive active material layer satisfies: 130 µm ≤ D < 150 µm;
Charging the battery at 0.5C until a nominal upper-limit voltage if the thickness D of the positive active material layer satisfies: D ≥ 150 µm.

Fully discharging the lithium-ion battery of each embodiment and each comparative embodiment, and then charging the battery at different C-rates (with reference to the above charging method). Disassembling the charged lithium-ion battery to obtain a disassembled interface of the lithium-ion battery. The lithium plating degree of the lithium-ion battery is shown in FIG. 7. The lithium plating degrees are ranked as: severe lithium plating > lithium plating > slight lithium plating > no lithium plating.

### Embodiment 1

### <Preparing a positive electrode plate>

Mixing lithium cobalt oxide (LiCoO₂) as a positive active material, conductive carbon black (SP) as a positive conductive agent, and polyvinylidene difluoride (PVDF for short, with a weight-average molecular weight of 7×10⁶) as a positive binder at a mass ratio of 96: 2: 2, adding NMP as a solvent, and stirring the mixture with a vacuum mixer until the system is homogeneous, so as to obtain a positive electrode slurry in which the solid content is 75 wt%. Coating one surface of a 10 µm-thick positive current collector aluminum foil with the positive electrode slurry evenly, and drying the slurry in a 90 °C environment to obtain a positive electrode plate coated with a positive active material layer on a single side. Subsequently, repeating the foregoing steps on the other surface of the aluminum foil to obtain a positive electrode plate coated with the positive active material layer on both sides. Performing cold-pressing, cutting, and tab welding to obtain a positive electrode plate of 74 mm × 851 mm in size for further use. The thickness D of the positive active material layer is equal to 190 µm.

Exposing a target region of the positive electrode plate to a mixed atmosphere of Ar and SiF₄ (the volume ratio between Ar and SiF₄ is 1) for 1 hour in an environment with a water content less than 100 ppm, so as to obtain a positive electrode plate with an inert layer (with a width E of 6 mm, and a thickness of 0.8 µm) provided on the surfaces on both sides of the positive active material layer, where the inert layer includes F(-SiF₂-O-)ₙH and n is 4 to 50.

### <Preparing a negative electrode plate>

Mixing artificial graphite as a negative active material, Super P as a negative conductive agent, polyacrylic acid (with a weight-average molecular weight of 8×10⁶) as a negative binder, and sodium carboxymethyl cellulose (with a weight-average molecular weight of 1×10⁷) as a thickener at a mass ratio of 83.5: 10.0: 5.0: 1.5, and then adding deionized water as a solvent. Stirring the mixture with a vacuum mixer to obtain a homogeneous negative electrode slurry in which the solid content is 75 wt%.

Mixing polyacrylic acid (with a weight-average molecular weight of 8000000) with Super P at a mass ratio of 50: 50, and then adding deionized water as a solvent. Stirring the mixture with a vacuum mixer to obtain a homogeneous undercoat slurry in which the solid content is 75 wt%.

Coating one surface of a 12 µm-thick negative current collector copper foil with the undercoat slurry, and oven-drying the slurry at 120 °C to obtain a negative electrode plate coated with a 30 µm-thick undercoat on a single side. Subsequently, repeating the foregoing coating step on the other surface of the copper foil to obtain a negative electrode plate coated with the undercoat on both sides. Applying the negative electrode slurry onto one surface of the undercoated copper foil, and oven-drying the slurry at 120 °C to obtain a negative electrode plate coated with a 130 µm-thick negative active material layer on a single side. Subsequently, repeating the foregoing coating step on the other surface of the undercoated copper foil to obtain a negative electrode plate coated with the negative active material layer on both sides. Performing cold-pressing, cutting, and tab welding to obtain a negative electrode plate of 76 mm × 867 mm in size for further use.

### <Separator>

Using a 4 µm-thick polyethylene film (manufacturer: Zhuogao New Material Technology Co., Ltd.) as a separator.

### <Preparing an electrolyte solution>

Mixing ethylene carbonate (EC), diethyl carbonate (DEC), and propylene carbonate (PC) at a mass ratio of 1: 1: 1 in an dry argon atmosphere to form a nonaqueous organic solvent, and then adding lithium hexafluorophosphate (LiPF₆) into the nonaqueous organic solvent to dissolve, and stirring well to obtain an electrolyte solution in which the concentration of LiPF₆ is 1.15 mol/L.

### <Preparing a lithium-ion battery>

Stacking the above-prepared negative electrode plate, separator, and positive electrode plate sequentially, and winding the stacked structure to obtain a jelly-roll electrode assembly. Putting the electrode assembly into an aluminum laminated film pocket, drying the pocket, and then injecting the electrolyte solution. Performing steps such as vacuum sealing, static standing, chemical formation, capacity grading, degassing, and edge trimming to obtain a lithium-ion battery.

### Embodiments 2 to 15

Identical to Embodiment 1 except that the relevant parameters are adjusted according to Table 1.

### Comparative Embodiments 1 to 4

Identical to Embodiment 1 except that the relevant parameters are adjusted according to Table 1.

### Comparative Embodiment 5

Identical to Embodiment 3 except that no inert layer is provided in the positive electrode plate.

Table 1 shows the preparation parameters and performance parameters of each embodiment and each comparative embodiment.

**Table 1**

| | Volume ratio between Ar and SiF₄ | Constituents of inert layer | B (%) | D (µm) | BD/100 | E (mm) | E/D | Thickness of inert layer (µm) | Severity of lithium plating |
|---|---|---|---|---|---|---|---|---|---|
| Embodiment 1 | 1 | F(-SiF₂-O-)ₙH (n is 4 to 50) | 0.1 | 190 | 0.19 | 6 | 0.032 | 0.8 | Slight lithium plating |
| Embodiment 2 | 3 | F(-SiF₂-O-)ₙH (n is 4 to 50) | 0.6 | 100 | 0.60 | 6 | 0.060 | 1.2 | No lithium plating |
| Embodiment 3 | 5 | F(-SiF₂-O-)ₙH (n is 4 to 50) | 1.1 | 85 | 0.94 | 6 | 0.071 | 1.2 | No lithium plating |
| Embodiment 4 | 8.5 | F(-SiF₂-O-)ₙH (n is 4 to 50) | 4.0 | 100 | 4.00 | 6 | 0.060 | 1.3 | No lithium plating |
| Embodiment 5 | 10 | F(-SiF₂-O-)ₙH (n is 4 to 50) | 6.0 | 190 | 11.40 | 6 | 0.032 | 1.5 | Slight lithium plating |
| Embodiment 6 | 5 | F(-SiF₂-O-)ₙH (n is 4 to 50) | 1.1 | 190 | 2.09 | 1 | \ | 1.2 | No lithium plating |
| Embodiment 7 | 5 | F(-SiF₂-O-)ₙH (n is 4 to 50) | 1.1 | 190 | 2.09 | 1.5 | \ | 1.2 | No lithium plating |
| Embodiment 8 | 5 | F(-SiF₂-O-)ₙH (n is 4 to 50) | 1.1 | 190 | 2.09 | 3 | \ | 1.2 | Lithium plating |
| Embodiment 9 | 5 | F(-SiF₂-O-)ₙH (n is 4 to 50) | 1.1 | 110 | 1.21 | 2 | \ | 1.2 | No lithium plating |
| Embodiment 10 | 5 | F(-SiF₂-O-)ₙH (n is 4 to 50) | 1.1 | 150 | 1.65 | 2.5 | \ | 1.2 | No lithium plating |
| Embodiment 11 | 5 | F(-SiF₂-O-)ₙH (n is 4 to 50) | 1.1 | 75 | 0.83 | 15 | \ | 1.2 | No lithium plating |
| Embodiment 12 | 5 | F(-SiF₂-O-)ₙH (n is 4 to 50) | 1.1 | 75 | 0.83 | 18 | \ | 1.2 | No lithium plating |
| Embodiment 13 | 5 | F(-SiF₂-O-)ₙH (n is 4 to 50) | 1.1 | 75 | 0.83 | 20 | \ | 1.2 | Slight lithium plating |
| Embodiment 14 | 5 | F(-SiF₂-O-)ₙH (n is 4 to 50) | 1.1 | 30 | 0.33 | 18 | \ | 1.2 | No lithium plating |
| Embodiment 15 | 5 | F(-SiF₂-O-)ₙH (n is 4 to 50) | 1.1 | 60 | 0.60 | 18 | \ | 1.2 | No lithium plating |
| Comparative Embodiment 1 | 5 | F(-SiF₂-O-)ₙH (n is 4 to 50) | 0.05 | 100 | 0.05 | 6 | 0.060 | 1.2 | Lithium plating |
| Comparative Embodiment 2 | 5 | F(-SiF₂-O-)ₙH (n is 4 to 50) | 7.0 | 100 | 7.00 | 6 | 0.060 | 1.2 | Lithium plating |
| Comparative Embodiment 3 | 5 | F(-SiF₂-O-)ₙH (n is 4 to 50) | 1.1 | 20 | 0.22 | 6 | 0.300 | 1.2 | No lithium plating |
| Comparative Embodiment 4 | 5 | F(-SiF₂-O-)ₙH (n is 4 to 50) | 1.1 | 260 | 2.86 | 6 | 0.023 | 1.2 | Beyond process window |
| Comparative Embodiment 5 | \ | \ | \ | 85 | \ | \ | \ | \ | Severe lithium plating |

| | | | | | | | | | |
|---|---|---|---|---|---|---|---|---|---|
| Note: "\" in Table 1 indicates absence of the corresponding parameter. | | | | | | | | | |

As can be seen from Embodiments 1 to 15 and Comparative Embodiments 1 to 5, an inert layer is disposed on the surface of the positive active material layer in the secondary battery in the embodiments. In addition, the thickness D µm of the positive active material layer, the mass percent B% of silicon, and the value of BD/100 are controlled to fall within the ranges specified herein. Therefore, the lithium plating degree in the overhang-specific region is relatively low, indicating that the lithium plating phenomenon in the overhang-specific region of the secondary battery is alleviated. However, no inert layer is disposed on the surface of the positive active material layer in the secondary battery in Comparative Embodiments 1, 2, and 5, or at least one of the mass percent B% of silicon in the secondary battery or the value of BD/100 falls outside the ranges specified herein. Therefore, the lithium plating degree in the overhang-specific region is severe. The secondary battery in Comparative Embodiment 3 does not incur lithium plating, but the thickness of the positive active material layer is overly thin. The coating weight of the positive active material layer is overly small, and the energy density of the secondary battery is overly low, so that the secondary battery is not normally usable and goes beyond the performance range specified herein. For the secondary battery in Comparative Embodiment 4, the thickness of the positive active material layer is excessive. The excessive thickness is unfavorable to cold-pressing of the positive electrode plate, and results in breakage of the electrode plate and detachment of the active material powder during winding. Consequently, the positive electrode plate goes beyond the process window, and is unable to form a secondary battery.

When the thickness of the positive active material layer changes, the width of the inert layer usually also affects the lithium plating degree in the overhang-specific region of the secondary battery. As can be seen from Embodiments 11 to 15, when the thickness of the positive active material layer and the width of the inert layer satisfy 30 ≤ D ≤ 80 and 15 ≤ E ≤ 18, the lithium plating degree in the overhang-specific region of the secondary battery is alleviated. As can be seen from Embodiments 2 to 4, when the thickness of the positive active material layer and the width of the inert layer satisfy 80 < D ≤ 100 and 0.03 < E/D < 0.15, the lithium plating degree in the overhang-specific region of the secondary battery is alleviated. As can be seen from Embodiments 6 to 10, when the thickness of the positive active material layer and the width of the inert layer satisfy 100 < D ≤ 200 and 1 ≤ E ≤ 3, the lithium plating degree in the overhang-specific region of the secondary battery is alleviated. In Embodiment 8, E is equal to 3 mm, and the inert layer covers a relatively large area of the positive active material layer. Therefore, the lithium plating takes on an "eaves effect", that is, occurs at the edge of the inert layer.

The thickness of the inert layer usually also affects the lithium plating degree in the overhang-specific region of the secondary battery. As can be seen from Embodiments 1 to 5, when the thickness of the inert layer falls within the range specified herein, the lithium plating degree in the overhang-specific region of the secondary battery is alleviated.

It is hereby noted that, as used herein, the terms "include", "comprise", and any variations thereof are intended to cover a non-exclusive inclusion relationship, whereby a process, method, item, or device that includes a series of elements not only includes such elements, but also includes other elements not expressly specified or also includes inherent elements of the process, method, item, or device.

Different embodiments of this application are described in a correlative manner. For the same or similar part in one embodiment, reference may be made to another embodiment. Each embodiment focuses on differences from other embodiments.

## Claims

1. A secondary battery, comprising an electrode assembly; the electrode assembly comprising a positive electrode plate (10) and a negative electrode plate (20); the positive electrode plate (10) and the negative electrode plate (20) are stacked up; **characterized in that**,
- the positive electrode plate (10) comprises a positive current collector (13) and a positive active material layer (12) disposed on a surface of the positive current collector (13);
- a thickness of the positive active material layer (12) is D µm, 30 ≤ D ≤ 200;the negative electrode plate (20) comprises a negative current collector (23) and a negative active material layer (22) disposed on a surface of the negative current collector (23); the positive active material layer (12) is oriented toward the negative active material layer (22); in a width direction (Y) of the positive electrode plate (10), the negative active material layer (22) comprises two opposite first edges (24) and the positive active material layer (12) comprises two opposite second edges (14); the two second edges (14) are located between the two first edges (24); the width direction (Y) of the positive electrode plate (10) is perpendicular to a thickness direction of the electrode assembly;
- an inert layer (11) is provided on a surface of the positive active material layer (12); the inert layer (11) coincides with at least a part of the second edges (14);
- the inert layer (11) comprises linear fluoropolysiloxane F(-SiF₂-O-)ₙH, wherein n is 3 to 100;
- a mass percent of silicon in the inert layer (11) is B%, 0.1 ≤ B ≤ 6.0; and 0.15 ≤ B × D/100 ≤ 12.00;
**wherein,** a testing method of the content B of silicon includes off disassembling the fully-discharged (0% SOC) secondary battery, using dimethyl carbonate (DMC) to wash 3 times the positive electrode plate (10) taken out of the disassembled secondary battery,
air-drying the electrode plate, and then analyzing the elements of the electrode plate by use of an energy dispersive X-ray spectrometer (EDS),
denoting the mass percent of silicon in any region of 15 µm × 15 µm on the inert layer as B%.

2. The secondary battery according to claim 1, **characterized in that** 0.60 ≤ B × D/100 ≤ 4.00.

3. The secondary battery according to claim 1, **characterized in that**, along the width direction (Y) of the positive electrode plate (10), a width of the inert layer (11) is E mm, 1 ≤ E ≤ 20.

4. The secondary battery according to claim 3, **characterized in that**, $30 \leq D \leq 80 ;$ and $15 \leq E \leq 18 .$

5. The secondary battery according to claim 3, **characterized in that**, $80 < D \leq 100 ;$ and $0.03 < E / D < 0.15 .$

6. The secondary battery according to claim 3, **characterized in that**, $100 < D \leq 200 ;$ and $1 \leq E \leq 2.5 .$

7. The secondary battery according to claim 1, **characterized in that** n is 4 to 50.

8. The secondary battery according to any one of claims 1 to 7, **characterized in that** a thickness of the inert layer (11) is 0.5µm to 2.0µm.

9. The secondary battery according to any one of claims 1 to 8, **characterized in that** the electrode assembly has a jelly-roll structure.

10. An electronic device, **characterized in that** the electronic device comprises the secondary battery according to any one of claims 1 to 9.

## Patentansprüche

1. Sekundärbatterie, umfassend eine Elektrodenanordnung, wobei die Elektrodenanordnung eine positive Elektrodenplatte (10) und eine negative Elektrodenplatte (20) umfasst; wobei die positive Elektrodenplatte (10) und die negative Elektrodenplatte (20) übereinander gestapelt sind; **dadurch gekennzeichnet, dass**
- die positive Elektrodenplatte (10) einen positiven Stromkollektor (13) und eine positive Aktivmaterialschicht (12), die auf einer Oberfläche des positiven Stromkollektors (13) angeordnet ist, umfasst;
- eine Dicke der positiven Aktivmaterialschicht (12) D µm beträgt, 30 ≤ D ≤ 200; die negative Elektrodenplatte (20) einen negativen Stromkollektor (23) und eine negative Aktivmaterialschicht (22), die auf einer Oberfläche des negativen Stromkollektors (23) angeordnet ist, umfasst; die positive Aktivmaterialschicht (12) der negativen Aktivmaterialschicht (22) zugewandt ist; in einer Breitenrichtung (Y) der positiven Elektrodenplatte (10) die negative Aktivmaterialschicht (22) zwei gegenüberliegende erste Kanten (24) umfasst und die positive Aktivmaterialschicht (12) zwei gegenüberliegende zweite Kanten (14) umfasst; die beiden zweiten Kanten (14) zwischen den beiden ersten Kanten (24) angeordnet sind; die Breitenrichtung (Y) der positiven Elektrodenplatte (10) senkrecht zu einer Dickenrichtung der Elektrodenanordnung verläuft;
- eine inerte Schicht (11) auf einer Oberfläche der positiven Aktivmaterialschicht (12) vorgesehen ist; die inerte Schicht (11) mit mindestens einem Teil der zweiten Kanten (14) zusammenfällt;
- die inerte Schicht (11) lineares Fluorpolysiloxan F(-SiF₂-O-)ₙH umfasst, wobei n 3 bis 100 ist;
- ein Massenanteil von Silizium in der inerten Schicht (11) B % beträgt, 0,1 ≤ B ≤ 6,0; und 0,15 ≤ B × D/100 ≤ 12,00;
**wobei** ein Prüfverfahren für den Gehalt B an Silizium umfasst:
Zerlegen der vollständig entladenen (0 % SOC) Sekundärbatterie,
Verwenden von Dimethylcarbonat (DMC), um die aus der zerlegten Sekundärbatterie entnommene positive Elektrodenplatte (10) dreimal zu waschen,
Lufttrocknen der Elektrodenplatte, und dann
Analysieren der Elemente der Elektrodenplatte unter Verwendung eines energiedispersiven Röntgenspektrometers (EDS), wobei der Massenanteil von Silizium in einem beliebigen Bereich von 15 µm × 15 µm auf der inerten Schicht als B % bezeichnet wird.

2. Sekundärbatterie nach Anspruch 1, **dadurch gekennzeichnet, dass** 0,60 ≤ B × D/100 ≤ 4,00.

3. Sekundärbatterie nach Anspruch 1, **dadurch gekennzeichnet, dass** entlang der Breitenrichtung (Y) der positiven Elektrodenplatte (10) eine Breite der inerten Schicht (11) E mm beträgt, 1 ≤ E ≤ 20.

4. Sekundärbatterie nach Anspruch 3, **dadurch gekennzeichnet, dass** $30 \leq D \leq 80 ;$ und $15 \leq E \leq 18 .$

5. Sekundärbatterie nach Anspruch 3, **dadurch gekennzeichnet, dass** $80 < D \leq 100 ;$ und $0 , 03 < E / D < 0 , 15 .$

6. Sekundärbatterie nach Anspruch 3, **dadurch gekennzeichnet, dass** $100 < D \leq 200 ;$ und $1 \leq E \leq 2 , 5 .$

7. Sekundärbatterie nach Anspruch 1, **dadurch gekennzeichnet, dass** n 4 bis 50 ist.

8. Sekundärbatterie nach einem der Ansprüche 1 bis 7, **dadurch gekennzeichnet, dass** eine Dicke der inerten Schicht (11) 0,5 µm bis 2,0 µm beträgt.

9. Sekundärbatterie nach einem der Ansprüche 1 bis 8, **dadurch gekennzeichnet, dass** die Elektrodenanordnung eine Jelly-Roll-Struktur aufweist.

10. Elektronische Vorrichtung, **dadurch gekennzeichnet, dass** die elektronische Vorrichtung die Sekundärbatterie nach einem der Ansprüche 1 bis 9 umfasst.

## Revendications

1. Une batterie secondaire, comprenant un assemblage d'électrodes ; l'assemblage d'électrodes comprenant une plaque d'électrode positive (10) et une plaque d'électrode négative (20) ; la plaque d'électrode positive (10) et la plaque d'électrode négative (20) sont empilées ; **caractérisée en ce que** :
- la plaque d'électrode positive (10) comprend un collecteur de courant positif (13) et une couche active positive (12) disposée sur une surface du collecteur de courant positif (13) ;
- une épaisseur de la couche active positive (12) est D µm, avec 30 ≤ D ≤ 200 ;
la plaque d'électrode négative (20) comprend un collecteur de courant négatif (23) et une couche active négative (22) disposée sur une surface du collecteur de courant négatif (23) ; la couche active positive (12) est orientée vers la couche active négative (22) ;
dans une direction de largeur (Y) de la plaque d'électrode positive (10), la couche active négative (22) comprend deux bords premiers opposés (24) et la couche active positive (12) comprend deux bords seconds opposés (14) ; les deux bords seconds (14) sont situés entre les deux bords premiers (24) ; la direction de largeur (Y) de la plaque d'électrode positive (10) est perpendiculaire à une direction d'épaisseur de l'assemblage d'électrodes ;
- une couche inerte (11) est prévue sur une surface de la couche active positive (12) ; la couche inerte (11) coïncide avec au moins une partie des bords seconds (14) ;
- la couche inerte (11) comprend du fluoropolysiloxane linéaire F(-SiF₂-O-)nH, où n est compris entre 3 et 100 ;
- le pourcentage massique de silicium dans la couche inerte (11) est B %, avec 0,1 ≤ B ≤ 6,0 ; et 0,15 ≤ B × D/100 ≤ 12,00 ;
dans lequel, une méthode de test de la teneur B en silicium comprend :
le démontage de la batterie secondaire complètement déchargée (0 % SOC), le lavage de la plaque d'électrode positive (10) extraite de la batterie secondaire démontée trois fois au moyen de carbonat de diméthyle (DMC), le séchage à l'air de la plaque d'électrode, puis
l'analyse des éléments chimiques de la plaque d'électrode à l'aide d'un spectromètre de rayons X à dispersion d'énergie (EDS),
en désignant comme B % le pourcentage massique de silicium dans toute région de 15 µm × 15 µm sur la couche inerte.

2. La batterie secondaire selon la revendication 1, **caractérisée en ce que** 0,60 ≤ B × D/100 ≤ 4,00.

3. La batterie secondaire selon la revendication 1, **caractérisée en ce que**, le long de la direction de largeur (Y) de la plaque d'électrode positive (10), une largeur de la couche inerte (11) est E mm, avec 1 ≤ E ≤ 20.

4. La batterie secondaire selon la revendication 3, **caractérisée en ce que** : $30 \leq D \leq 80 ;$ et $15 \leq E \leq 18 .$

5. La batterie secondaire selon la revendication 3, **caractérisée en ce que** : $80 < D \leq 100 ;$ et $0 , 03 < E / D < 0 , 15 .$

6. La batterie secondaire selon la revendication 3, **caractérisée en ce que** : $100 < D \leq 200 ;$ et $1 \leq E \leq 2 , 5 .$

7. La batterie secondaire selon la revendication 1, **caractérisée en ce que** n est compris entre 4 et 50.

8. La batterie secondaire selon l'une quelconque des revendications 1 à 7, **caractérisée en ce qu'**une épaisseur de la couche inerte (11) est comprise entre 0,5 µm et 2,0 µm.

9. La batterie secondaire selon l'une quelconque des revendications 1 à 8, **caractérisée en ce que** l'assemblage d'électrodes présente une structure en rouleau de gelée (jelly-roll).

10. Un dispositif électronique, **caractérisé en ce que** le dispositif électronique comprend la batterie secondaire selon l'une quelconque des revendications 1 à 9.
